# EUROPÄISCHE PATENTSCHRIFT

(11) **EP 4 176 701 B1**
(45) Veröffentlichungstag und Bekanntmachung des Hinweises auf die Patenterteilung: **11.10.2023**
(21) Anmeldenummer: 21207109.6
(22) Anmeldetag: 09.11.2021
(51) Int. Cl.: A01B 63/24, A01B 63/26

(54) **VORRICHTUNG ZUM FESTLEGEN WENIGSTENS EINES LANDWIRTSCHAFTLICHEN ARBEITSWERKZEUGES AN EINEM TRÄGERELEMENT**
DEVICE FOR FIXING AT LEAST ONE AGRICULTURAL IMPLEMENT TO A SUPPORT ELEMENT
DISPOSITIF DE FIXATION D'AU MOINS UN OUTIL AGRICOLE À UN ÉLÉMENT PORTEUR

(43) Veröffentlichungstag der Anmeldung: 10.05.2023
(73) Patentinhaber: Einböck Beteiligungs-GmbH, 4751 Dorf an der Pram (AT)
(72) Erfinder: STEINBERGER, Markus, 3370 Waasen (AT)
(74) Vertreter: Weickmann & Weickmann PartmbB

(56) Entgegenhaltungen:
- EP-A1- 2 842 404
- US-A1- 2014 230 704
- US-A1- 2015 034 343
- US-A1- 2016 255 759
- US-A1- 2019 159 396

## Beschreibung

### I. Anwendungsgebiet

Die vorliegende Erfindung betrifft eine Vorrichtung zum Festlegen wenigstens eines landwirtschaftlichen Arbeitswerkzeuges an einem Trägerelement oder zum Festlegen eines Trägerelements, an dem bereits ein landwirtschaftliches Arbeitswerkzeug befestigt ist, an einem Tragwerk. Eine Vielzahl von Trägerelementen der in Rede stehenden Art, welche jeweils eine erfindungsgemäße Vorrichtung samt Arbeitswerkzeug tragen, kann an einem größeren landwirtschaftlichen Arbeitsgerät befestigt und zur Bearbeitung eines landwirtschaftlichen Bodens mit Hilfe eines Zugfahrzeuges über Letzteren gezogen werden. Bei den Arbeitswerkzeugen kann es sich beispielsweise um Hackwerkzeuge, Rechen, Zinken, Zinkensterne, Fingersterne oder Ähnliches handeln.

### II. Technischer Hintergrund

Es ist bekannt, landwirtschaftliche Arbeitswerkzeuge an einer bestimmten Stelle länglicher Trägerelemente mit Klemmschrauben zu fixieren. Soll das Arbeitswerkzeug an dem Trägerelement verschoben werden, um den Abstand der Arbeitswerkzeuge quer zu der Zugrichtung des Zugfahrzeuges beispielsweise an einen geänderten Abstand von Nutzpflanzenreihen in dem landwirtschaftlichen Boden anzupassen, so muss bei jedem Trägerelement eine Klemmschraube gelöst und nach dem Verschieben des Arbeitswerkzeuges wieder angezogen werden. Das Lösen und Anziehen der Klemmschrauben ist verhältnismäßig aufwendig.

Vorrichtungen zum Festlegen wenigstens eines landwirtschaftlichen Arbeitswerkzeuges an einem Trägerelement sind zum Beispiel aus den Druckschriften US 2016/255759 A1, US 2015/034343 A1, EP 2 842 404 A1, US 2019/159396 A1 und US 2014/230704 A1 bekannt.

### III. Darstellung der Erfindung

### a) Technische Aufgabe

Es ist daher Aufgabe der vorliegenden Erfindung, eine Vorrichtung zum Festlegen wenigstens eines landwirtschaftlichen Arbeitswerkzeuges an einem länglichen Trägerelement oder zum Festlegen eines Trägerelements, an dem ein landwirtschaftliches Arbeitswerkzeug befestigt ist, an einem Tragwerk zu schaffen, bei welcher das Lösen und Festlegen der Arbeitswerkzeuge mit möglichst wenig Handhabungsaufwand verbunden ist.

### b) Lösung der Aufgabe

Zur Lösung dieser Aufgabe wird eine Vorrichtung zum Festlegen wenigstens eines landwirtschaftlichen Arbeitswerkzeuges an einem länglichen Trägerelement oder zum Festlegen eines Trägerelements, an dem ein landwirtschaftliches Arbeitswerkzeug befestigt ist, an einem Tragwerk vorgeschlagen, welche die Merkmale des Anspruchs 1 aufweist. Weitere Ausgestaltungen der vorliegenden Erfindung ergeben sich aus den Unteransprüchen.

Erfindungsgemäß wird eine Vorrichtung zum Festlegen wenigstens eines landwirtschaftlichen Arbeitswerkzeuges an einem Trägerelement vorgeschlagen, die einen Grundkörper mit einer Führungsaufnahme aufweist, die dem Aufnehmen des länglichen Trägerelements und dem Führen des Grundkörpers entlang des Trägerelements dient. Die Führungsaufnahme kann beispielsweise ein den Grundkörper durchsetzender Führungskanal sein, durch den sich das längliche Trägerelement erstrecken kann. An dem Grundkörper selbst, der auf das Trägerelement aufgeschoben werden kann, können ein oder mehrere landwirtschaftliche Arbeitswerkzeuge befestigt werden. Die Arbeitswerkzeuge sind dann zusammen mit dem Grundkörper verschiebbar.

Alternativ kann der Grundkörper bzw. die erfindungsgemäße Vorrichtung einen Bestandteil eines Tragwerks bilden, das von einem Zugfahrzeug gezogen werden kann. In der Führungsaufnahme des Grundkörpers kann ein längliches Trägerelement, an dem wenigstens ein landwirtschaftliches Arbeitswerkzeug befestigt ist, verschoben werden. Das Arbeitswerkzeug ist dann zusammen mit dem Trägerelement relativ zu dem Grundkörper verschiebbar.

Die erfindungsgemäße Vorrichtung umfasst des Weiteren einen Klemmhebel, der ein Klemmloch aufweist. Dabei ist der Klemmhebel relativ zu dem Grundkörper derart anordenbar, dass das Klemmloch mit der Führungsaufnahme in dem Grundkörper fluchtet. Dementsprechend ist die Vorrichtung derart auf das Trägerelement aufschiebbar, dass sich das Trägerelement sowohl durch das Klemmloch als auch durch die Führungsaufnahme in dem Grundkörper erstreckt.

Erfindungsgemäß weist das Klemmloch eine erste unrunde Form und ein Querschnitt der Führungsaufnahme in dem Grundkörper eine zweite unrunde Form auf. Dies bewirkt, dass eine Drehmomentübertragung einerseits von dem Klemmhebel auf das Trägerelement, das einen Querschnitt mit einer dritten unrunden Form aufweist, sowie andererseits von dem Trägerelement auf die Führungsaufnahme und damit auf den Grundkörper möglich ist.

Erfindungsgemäß umfasst die Vorrichtung außerdem eine Betätigungseinrichtung, die an dem Grundkörper angeordnet ist. Der Klemmhebel ist mittels der Betätigungseinrichtung derart mit einem Klemmdrehmoment beaufschlagbar, dass er sich relativ zu dem Grundkörper von einer Freigabestellung, in welcher die erfindungsgemäße Vorrichtung und damit das Arbeitswerkzeug entlang des Trägerelements verschiebbar ist oder ein Trägerelement mit an ihm befestigtem Arbeitswerkzeug in dem Grundkörper verschoben werden kann, in eine Klemmstellung, in welcher die erfindungsgemäße Vorrichtung und damit das Arbeitswerkzeug auf Grund der Wirkung der vorgenannten Drehmomentübertragung reibschlüssig an dem Trägerelement festgelegt ist oder das Trägerelement mit an ihm befestigtem Arbeitswerkzeug reibschlüssig in dem Grundkörper festgelegt ist, verdreht. Der Drehwinkel dieser Drehbewegung wird von dem in der Freigabestellung vorhandenen Spiel zwischen Klemmloch und Führungsaufnahme einerseits sowie Trägerelement andererseits bestimmt und ist dementsprechend relativ klein.

Der Vorteil der erfindungsgemäßen Vorrichtung besteht darin, dass ein Lösen und Festlegen der landwirtschaftlichen Arbeitswerkzeuge an dem länglichen Trägerelement ohne das zeitraubende Drehen von Klemmschrauben möglich ist. Die Betätigungseinrichtung zum Beaufschlagen des Klemmhebels mit dem Klemmdrehmoment kann derart ausgelegt werden, dass sie in vorteilhafter Weise nur geringfügige Handbewegungen des Bedieners erfordert und/oder kraftunterstützt arbeitet.

Die erste unrunde Form des Klemmlochs des Klemmhebels, die zweite unrunde Form des Querschnitts der Führungsaufnahme in dem Grundkörper und die dritte unrunde Form des Querschnitts des länglichen Trägerelements ermöglichen eine formschlüssige Drehmomentübertragung zwischen dem Klemmhebel und dem Trägerelement einerseits sowie dem Trägerelement und der Führungsaufnahme des Grundkörpers andererseits. Diese formschlüssige Drehmomentübertragbarkeit ermöglicht die erfindungsgemäß gewünschte, reibschlüssige Verklemmung der erfindungsgemäßen Vorrichtung an dem Trägerelement.

Das Trägerelement mit der dritten unrunden Querschnittsform wird in der Führungsaufnahme des Grundkörpers drehfest gehalten. Durch Beaufschlagen des Klemmhebels mit dem Klemmdrehmoment versucht dieser das in der Führungsaufnahme gehaltene Trägerelement um seine Längsachse zu drehen. Dies ist nur im Rahmen des vorhandenen Spiels möglich, da das Trägerelement in der Führungsaufnahme drehfest gehalten wird. Somit tordiert der Klemmhebel das in der Führungsaufnahme des Grundkörpers drehfest gehaltene Trägerelement. Dies führt zu Reib- bzw. Klemmkräften zwischen der Führungsaufnahme und dem Trägerelement einerseits sowie zwischen dem Klemmhebel und dem Trägerelement andererseits, welche die erfindungsgemäße Vorrichtung an dem Trägerelement reibschlüssig fixieren bzw. festlegen, sodass die Vorrichtung nicht mehr entlang des Trägerelements verschoben werden kann.

Die erste unrunde Form des Klemmloches, die zweite unrunde Form des Querschnitts der Führungsaufnahme und die dritte unrunde Form des Querschnitts des Trägerelements müssen nicht zwingend identisch sein. Es ist im Sinne der vorliegenden Erfindung vollkommen ausreichend, wenn ihre jeweilige Unrundheit eine formschlüssige Drehmomentübertragung zwischen dem Klemmhebel und dem Trägerelement sowie zwischen dem Trägerelement und der Führungsaufnahme des Grundkörpers zulässt.

Vorzugsweise sind die erste unrunde Form, die zweite unrunde Form und die dritte unrunde Form identisch ausgestaltet. Im Hinblick auf die Größe des Klemmloches, die Größe des Querschnitts der Führungsaufnahme und die Größe des Querschnitts des Trägerelements ist darauf zu achten, dass zwischen der Oberfläche des Trägerelements einerseits und den Lochwandungen des Klemmloches sowie den Führungswandungen der Führungsaufnahme andererseits genügend Spiel vorhanden ist, um den Grundkörper sowie den Klemmhebel entlang des Trägerelements verschieben zu können, wenn sich der Klemmhebel in seiner Freigabestellung befindet, in welcher er nicht mit einem Klemmdrehmoment beaufschlagt ist.

Vorzugsweise wird für die erste unrunde Form und die zweite unrunde Form jeweils eine Mehrkantform gewählt. Hier sind beispielsweise eine Vierkantform oder eine Sechskantform denkbar. Auch andere Mehrkantformen können Anwendung finden. Vorteilhaft ist des Weiteren, wenn die erfindungsgemäße Vorrichtung mit einem Trägerelement zusammenwirkt, dessen Querschnitt dieselbe Mehrkantform aufweist, wie das Klemmloch und der Querschnitt der Führungsaufnahme in dem Grundkörper.

In vorteilhafter Weise ist das Klemmloch zur Umgebung hin vollständig geschlossen ausgebildet. Das Trägerelement wird dann von dem Klemmhebel allseitig umgriffen und sicher gehalten. Alternativ ist denkbar, das Klemmloch zur Umgebung hin auf einer Seite offen auszubilden, sodass das Trägerelement von dem Klemmhebel in der Art eines Maulschlüssels umgriffen werden kann. Auch eine solche Bauweise würde die formschlüssige Drehmomentübertragung von dem Klemmhebel auf das Trägerelement gewährleisten.

In vorteilhafter Weise kann der Klemmhebel als Doppelhebel umfassend zwei vorzugsweise identische Teilhebel ausgestaltet sein. Die beiden Teilhebel sind dann auf zwei gegenüberliegenden Seiten außerhalb des Grundkörpers angeordnet und können dort das Trägerelement an zwei voneinander beabstandeten Stellen desselben umgreifen. Die von dem Klemmhebel in das Trägerelement eingebrachten Klemmkräfte wirken dann im Hinblick auf den Grundkörper symmetrisch.

In vorteilhafter Weise kann die Betätigungseinrichtung zum Beaufschlagen des Klemmhebels mit dem Klemmdrehmoment einen von Hand oder kraftunterstützt betätigbaren Betätigungshebel und ein stangenartig gestaltetes Zugelement aufweisen. Dabei ist der Betätigungshebel über ein Schwenkgelenk gelenkig mit dem Klemmhebel verbunden und das Zugelement ist über ein erstes Gelenk gelenkig mit dem Betätigungshebel sowie über ein zweites Gelenk gelenkig mit dem Grundkörper verbunden. Das erste Gelenk und das Schwenkgelenk weisen einen Abstand voneinander auf.

Zum Beaufschlagen des Klemmhebels mit dem Klemmdrehmoment wird der Betätigungshebel um die Achse des Schwenkgelenks von einer Losstellung, in welcher sich der Klemmhebel in seiner Freigabestellung befindet, in eine Arretierstellung, in welcher sich der Klemmhebel in seiner Klemmstellung befindet, verschwenkt. Während dieser Schwenkbewegung des Betätigungshebels nimmt ein Abstand des ersten Gelenks von dem zweiten Gelenk entgegen einer elastischen Rückstellkraft zunächst zu, erreicht dann in einer Totpunktstellung des Betätigungshebels einen Maximalwert und nimmt schließlich nach dem Durchlaufen der Totpunktstellung auf Grund der Wirkung der elastischen Rückstellkraft wieder ab.

In vorteilhafter Weise weist das erste Gelenk ein hülsenartig ausgebildetes Gelenkelement auf, das von dem Zugelement durchsetzt ist. Das Gelenkelement ist in Längsrichtung des Zugselements relativ zu diesem bewegbar. Die elastische Rückstellkraft kann von wenigstens einer Druckfeder bewirkt werden, die sich an dem Zugelement abstützt und das Gelenkelement in Richtung des zweiten Gelenks drückt.

Alternativ besteht die Möglichkeit, die Betätigungseinrichtung in Form eines kraftunterstützten Betätigungsmittels, beispielsweise in Form wenigstens eines Hydraulikzylinders oder wenigstens eines Pneumatikzylinders oder wenigstens eines elektrischen Zylinders, auszubilden, das zwischen dem Grundkörper und dem Klemmhebel wirkend angeordnet ist und mit dessen Hilfe der Klemmhebel mit dem Klemmdrehmoment beaufschlagt werden kann.

### c) Ausführungsbeispiel

Nachfolgend wird ein Ausführungsbeispiel der erfindungsgemäßen Vorrichtung beispielhaft anhand der Zeichnungen beschrieben. Es zeigen:
- Fig. 1:: eine perspektivische Ansicht, in welcher ein Ausführungsbeispiel der erfindungsgemäßen Vorrichtung zu sehen ist, wobei sich der Betätigungshebel in seiner Losstellung befindet;
- Fig. 2:: eine Seitenansicht der in Fig. 1 gezeigten Vorrichtung mit in seiner Losstellung befindlichem Betätigungshebel; und
- Fig. 3:: eine Seitenansicht der in Fig. 1 gezeigten Vorrichtung, wobei sich der Betätigungshebel in seiner Arretierstellung befindet.

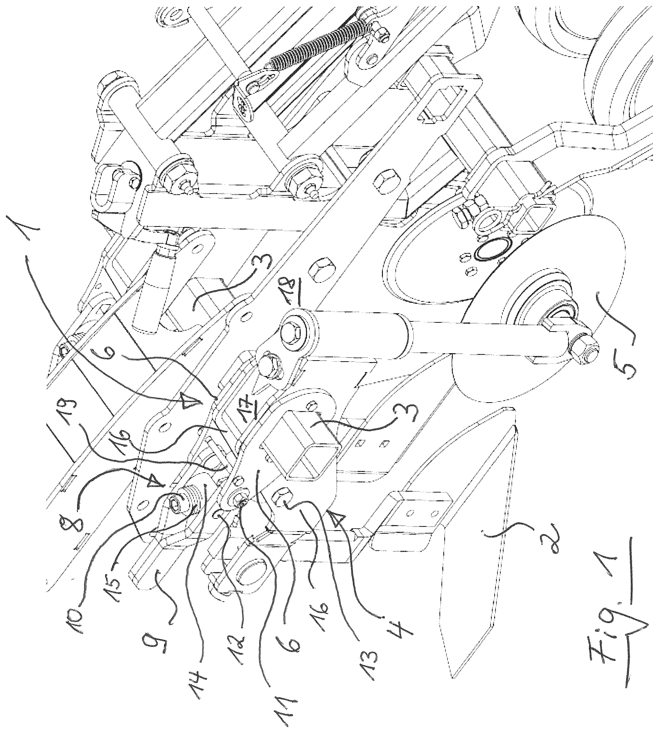

In den Fig. 1 bis 3 entsprechen gleiche Bezugszeichen gleichen Teilen des dargestellten Ausführungsbeispiels der erfindungsgemäßen Vorrichtung 1.

In den Fig. 1 bis 3 ist ein Ausführungsbeispiel einer erfindungsgemäßen Vorrichtung 1 zu sehen. Die Vorrichtung 1 weist einen Grundkörper 4 auf, der bei dem gezeigten Ausführungsbeispiel aus zwei spiegelsymmetrischen Seitenteilen 16 und einem diese verbindenden Hülsenteil 17 besteht. An dem Grundkörper 4 sind hier zwei landwirtschaftliche Arbeitswerkzeuge 2 und 5 befestigt, bei denen es sich um eine Schneidscheibe und einen Winkelmesser handelt.

Der in Fig. 1 nicht zusehende Innenraum des Hülsenteils 17 dient als kanalartige Führungsaufnahme zum Aufnehmen des länglichen Trägerelements 3 sowie zum Führen des Grundkörpers 4 entlang des Trägerelements 3. Bei dem gezeigten Ausführungsbeispiel ist das längliche Trägerelement 3 als Vierkantprofilkörper ausgebildet.

Wie in Fig. 1 zu erkennen ist, ist das Trägerelement 3 fest an einem hier nicht weiter interessierenden Tragwerk 18 gelagert. Der Grundkörper 4 kann auf dem in Fig. 1 vor dem Tragwerk 18 liegenden Abschnitt des Trägerelements 3 frei verschoben werden oder vollständig von diesem Abschnitt abgenommen werden, sofern er nicht reibschlüssig mit dem Trägerelement 3 verklemmt ist.

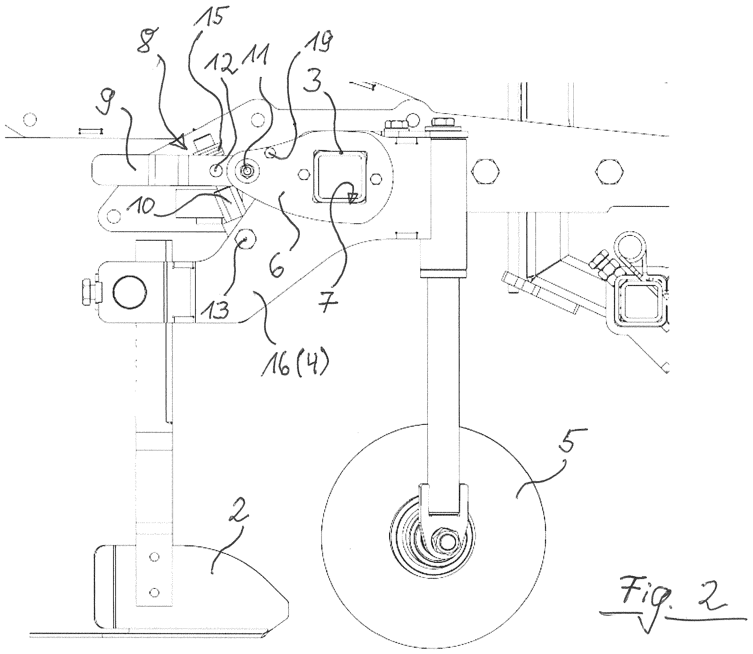

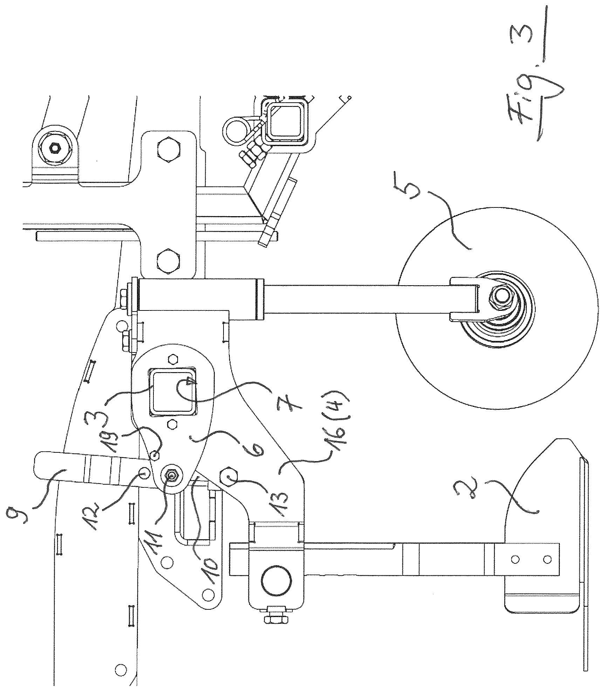

In Fig. 1 ist des Weiteren ein als Doppelhebel ausgebildeter Klemmhebel 6 zu sehen, der in der Seitenansicht gemäß Fig. 2 und 3 birnenförmig aussieht. Jeweils einer der beiden Teilhebel des Klemmhebels 6 befindet sich in Fig. 1 vor dem vorderen Seitenteil 16 sowie hinter dem hinteren Seitenteil 16 des Grundkörpers 4. Wie zu erkennen ist, weist der Klemmhebel 6 ein in den Fig. 2 und 3 gekennzeichnetes Klemmloch 7 auf, welches eine viereckige Form aufweist, die der Vierkantform des Querschnitts des Trägerelements 3 entspricht.

Bei dem gezeigten Ausführungsbeispiel ist der Querschnitt des Trägerelements 3 viereckig, hat das Klemmloch 7 eine viereckige Form und weist die von dem Innenraum des Hülsenteils 17 gebildete Führungsaufnahme des Grundkörpers 4 ebenso einen viereckigen Querschnitt auf. Das Hülsenteil 17 - und somit der gesamte Grundkörper 4 - sowie der Klemmhebel 6 können mit Ausnahme der durch das vorhandene Spiel zugelassenen, geringfügigen Verdrehbarkeit somit nicht um die Längsachse des Trägerelements 3 gedreht werden.

In den Fig. 1 und 2 ist eine Betätigungseinrichtung 8 gekennzeichnet, mit deren Hilfe der Klemmhebel 6 von seiner in Fig. 2 gezeigten Freigabestellung in seine in Fig. 3 gezeigte Klemmstellung und umgekehrt gebracht werden kann. In der in Fig. 3 zusehenden Klemmstellung ist der Klemmhebel 6 etwas weiter im Gegenuhrzeigersinn verdreht als in der in Fig. 2 gezeigten Freigabestellung. Dies ist daran zu erkennen, dass die Lochwandungen des Klemmloches 7 in Fig. 3 nicht parallel zu den Wandungen des Hohlprofils des Trägerelements 3 verlaufen.

In der in Fig. 3 zu sehenden Klemmstellung wird der Klemmhebel 6 von der Betätigungseinrichtung 8 mit einem Klemmdrehmoment beaufschlagt, welches im Gegenuhrzeigersinn wirkt und danach trachtet, den Klemmhebel 6 relativ zu dem Grundkörper 4 bzw. dessen Seitenteil 16 zu verdrehen. Dabei überträgt der Klemmhebel 6 dieses Drehmoment auf das Trägerelement 3, welches dadurch ebenso danach trachtet, sich im Gegenuhrzeigersinn um seine Längsachse zu drehen. Da das Trägerelement 3 in der von dem Innenraum des Hülsenteils 17 gebildeten Führungsaufnahme drehfest gehalten wird, kann eine derartige Drehung jedoch nicht bzw. nur im Rahmen des Spiels zwischen dem Trägerelement 3 und den Wandungen der Führungsaufnahme stattfinden.

Im Ergebnis werden somit der Grundkörper 4 und der Klemmhebel 6 an dem Trägerelement 3 reibschlüssig verklemmt. Der Grundkörper 4 und der Klemmhebel 6 können in diesem Klemmzustand nicht mehr auf dem Trägerelement 3 verschoben werden. Eine reibschlüssige Fixierung des Grundkörpers 4 mit seinen Arbeitswerkzeugen 2 und 5 an dem Trägerelement 3 ist gewährleistet.

Die Betätigungseinrichtung 8 umfasst bei dem gezeigten Ausführungsbeispiel einen von Hand betätigbaren Betätigungshebel 9 sowie ein als Zugstange ausgebildetes Zugelement 10. Wie am besten in Fig. 2 zu sehen ist, ist der Betätigungshebel 9 über ein Schwenkgelenk 11 gelenkig mit dem in Fig. 2 linken Ende des Klemmhebels 6 verbunden. Des Weiteren ist der Betätigungshebel 9 über ein erstes Gelenk 12 gelenkig mit dem Zugelement 10 verbunden. An seinem in Fig. 2 unteren Ende ist das Zugelement 10 über ein zweites Gelenk 13 gelenkig mit dem Grundkörper 4 bzw. seinen beiden Seitenteilen 16 verbunden. Das stangenartige Zugelement 10 kann sich somit an dem Grundkörper 4 abstützen.

In Fig. 1 ist ein hülsenartiges Gelenkelement 14 zu sehen, welches Bestandteil der Konstruktion des ersten Gelenks 12 zwischen den Betätigungshebel 9 und dem Zugelement 10 ist. Das hülsenartig ausgebildete Gelenkelement 14 wird quer zu seiner Hülsenachse, die der Gelenkachse des ersten Gelenks 12 entspricht, von dem Zugelement 10 durchsetzt. Relativ zu dem Betätigungshebel 9 kann sich das Gelenkelement 14 lediglich um die Gelenkachse des ersten Gelenks 12 drehen, eine lineare Bewegung des Gelenkelements 14 relativ zu dem Betätigungshebel 9 ist nicht möglich.

In den Fig. 1 und 2 ist des Weitern eine Druckfeder 15 zu erkennen, die sich am oberen Ende des Zugelements 10 an diesem abstützt und danach trachtet, das Gelenkelement 14 in den Fig. 1 und 2 nach unten zu drücken.

Zum Festlegen des Grundkörpers 4 und der Arbeitswerkzeuge 2, 5 an dem Trägerelement 3 wird bei dem gezeigten Ausführungsbeispiel wie folgt vorgegangen:
Der Betätigungshebel 9 wird aus seiner in Fig. 2 gezeigten Losstellung um etwas mehr als 90° im Uhrzeigersinn um das Schwenkgelenk 11 verschwenkt. Dabei vergrößert sich der Abstand zwischen dem ersten Gelenk 12 und dem zweiten Gelenk 13, da sich das erste Gelenk 12 von der in Fig. 2 gezeigten Position in die in Fig. 3 gezeigte Position weiter nach oben bewegt. Dabei verschiebt sich das Gelenkelement 14 in gleichem Ausmaß auf dem Zugelement 10 nach oben, sodass die Druckfeder 15 zunehmend komprimiert wird und ihre auf das Gelenkelement 14 nach unten wirkende Rückstellkraft zunimmt.

Sobald der maximale Abstand zwischen dem ersten Gelenk 12 und dem zweiten Gelenk 13 erreicht ist, erreicht auch die Rückstellkraft der Druckfeder 15 ihren Maximalwert. Die in diesem Zustand erreichte Stellung des Betätigungshebels 9 wird als Totpunktstellung bezeichnet. Bei fortgesetzter Schwenkbewegung des Betätigungshebels 9 im Uhrzeigersinn wird diese Totpunktstellung überwunden und die in Fig. 3 zu sehende Arretierstellung des Betätigungshebels 9 erreicht.

Die Kompression der Druckfeder 15 und somit ihre Rückstellkraft haben in dieser Arretierstellung wieder ein wenig abgenommen. Durch das Überschreiten der Totpunktstellung ist der Betätigungshebel 9 in Fig. 3 kraftschlüssig in seiner Arretierstellung gesichert. Das in Fig. 1 gekennzeichnete und stangenförmig ausgebildete Anschlagelement 19 verhindert, dass der Betätigungshebel 9 über seine in Fig. 3 gezeigte Arretierstellung hinaus verschwenkt.

In der in Fig. 3 gezeigten Arretierstellung des Betätigungshebels 9 drückt die Federkraft der Druckfeder 15 über das Gelenkelement 14 den Betätigungshebel 9 nach unten. Über das Schwenkgelenk 11 wird diese Kraft auf den Klemmhebel 6 übertragen, der dadurch in Fig. 3 im Gegenuhrzeigersinn um einen verhältnismäßig kleinen Drehwinkel verdreht wird, bis Teile der Lochwandungen seines Klemmloches 7 an der Oberfläche des Trägerelements 3 anliegen und außerdem Oberflächen des

Trägerelements 3 an Wandungen der Führungsaufnahme in dem Hülsenteil 17 anliegen. In diesem Zustand wird die reibschlüssige Klemmung des Grundkörpers 4 an dem Trägerelement 3 bewirkt.

Alternativ zu der beschriebenen Betätigungseinrichtung 8 könnte eine Betätigungseinrichtung beispielsweise in Form eines Hydraulikzylinders, eines Pneumatikzylinders oder eines elektrischen Zylinders vorgesehen werden, dessen Enden beispielsweise zwischen denjenigen Stellen wirken, an denen sich bei dem gezeigten Ausführungsbeispiel das zweite Gelenk 13 und das Schwenkgelenk 11 befinden.

Die Vorrichtung 1 kann auch dazu verwendet werden, ein Trägerelement 3, an dem die Arbeitswerkzeuge 2, 5 bereits erfindungsgemäß oder mit anderen Mitteln befestigt sind, an dem in Fig. 1 zu sehenden Tragwerk 18 festzulegen. Hierzu kann die Vorrichtung 1 mit ihrem Grundkörper 4 in das Tragwerk 18 integriert werden. Das Trägerelement 3 wird dann in Fig. 1 weiter rechts in der Führungsaufnahme des Grundkörpers 4 verklemmt.

### BEZUGSZEICHENLISTE

- 1: Vorrichtung
- 2: Arbeitswerkzeug
- 3: Trägerelement
- 4: Grundkörper
- 5: Arbeitswerkzeug
- 6: Klemmhebel
- 7: Klemmloch
- 8: Betätigungseinrichtung
- 9: Betätigungshebel
- 10: Zugelement
- 11: Schwenkgelenk
- 12: Erstes Gelenk
- 13: Zweites Gelenk
- 14: Gelenkelement
- 15: Druckfeder
- 16: Seitenteile des Grundkörpers 4
- 17: Hülsenteil des Grundkörpers 4
- 18: Tragwerk
- 19: Anschlagelement

## Patentansprüche

1. Vorrichtung (1) zum Festlegen wenigstens eines landwirtschaftlichen Arbeitswerkzeuges (2, 5) an einem Trägerelement (3) oder zum Festlegen eines Trägerelements, an dem ein landwirtschaftliches Arbeitswerkzeug befestigt ist, an einem Tragwerk,
**dadurch gekennzeichnet, dass**
• die Vorrichtung (1) einen Grundkörper (4) mit einer Führungsaufnahme zum Aufnehmen des Trägerelements (3) und zum Führen des Grundkörpers (4) entlang des Trägerelements (3) aufweist, wobei an dem Grundkörper wenigstens ein landwirtschaftliches Arbeitswerkzeug (2, 5) befestigbar ist oder der Grundkörper einen Bestandteil des Tragwerks bildet,
• die Vorrichtung (1) einen Klemmhebel (6) mit einem Klemmloch (7) umfasst, wobei der Klemmhebel (6) derart anordenbar ist, dass das Klemmloch (7) mit der Führungsaufnahme fluchtet, so dass die Vorrichtung (1) so mit dem Trägerelement (3) verbindbar ist, dass es sich sowohl durch das Klemmloch (7) als auch durch die Führungsaufnahme erstreckt,
• wobei das Klemmloch (7) eine erste unrunde Form und ein Querschnitt der Führungsaufnahme eine zweite unrunde Form aufweisen, so dass eine Drehmomentübertragung einerseits von dem Klemmhebel (6) auf das Trägerelement (3), das einen Querschnitt mit einer dritten unrunden Form aufweist, sowie andererseits von dem Trägerelement (3) auf die Führungsaufnahme und damit auf den Grundkörper (4) möglich ist, und
• die Vorrichtung (1) eine Betätigungseinrichtung (8) umfasst, die an dem Grundkörper (4) angeordnet ist, wobei der Klemmhebel (6) mittels der Betätigungseinrichtung (8) derart mit einem Klemmdrehmoment beaufschlagbar ist, dass er sich relativ zu dem Grundkörper (4) von einer Freigabestellung, in welcher die Vorrichtung (1) relativ zu dem Trägerelement (3) verschiebbar ist, in eine Klemmstellung, in welcher die Vorrichtung (1) auf Grund der Wirkung der Drehmomentübertragung reibschlüssig an dem Trägerelement (3) festgelegt ist, verdreht.

2. Vorrichtung (1) nach Anspruch 1,
**dadurch gekennzeichnet, dass**
die erste unrunde Form und die zweite unrunde Form identisch sind, wobei die Vorrichtung (1) auf dem Trägerelement (3) insbesondere dann festlegbar ist, wenn die dritte unrunde Form identisch zu der ersten unrunden Form und der zweiten unrunden Form ist.

3. Vorrichtung (1) nach Anspruch 2,
**dadurch gekennzeichnet, dass**
die erste unrunde Form und die zweite unrunde Form von einer Mehrkantform, insbesondere einer Vierkantform oder Sechskantform, gebildet werden.

4. Vorrichtung (1) nach einem der vorangehenden Ansprüche,
**dadurch gekennzeichnet, dass**
das Klemmloch (7) zur Umgebung vollständig geschlossen ausgebildet ist, so dass das Trägerelement (3) von dem Klemmhebel (6) allseitig umgreifbar ist.

5. Vorrichtung (1) nach einem der Ansprüche 1 bis 3,
**dadurch gekennzeichnet, dass**
das Klemmloch (7) zur Umgebung auf einer Seite offen ausgebildet ist, so dass das Trägerelement (3) von dem Klemmhebel (6) maulschlüsselartig umgreifbar ist.

6. Vorrichtung (1) nach einem der vorangehenden Ansprüche,
**dadurch gekennzeichnet, dass**
der Klemmhebel (6) als Doppelhebel ausgestaltet ist und das Trägerelement (3) auf zwei gegenüberliegenden Seiten außerhalb des Grundkörpers (4) von dem Doppelhebel umgreifbar ist

7. Vorrichtung nach einem der vorangehenden Ansprüche,
**dadurch gekennzeichnet, dass**
die Betätigungseinrichtung (8) einen Betätigungshebel (9) und ein Zugelement (10) aufweist, wobei der Betätigungshebel (9) über ein Schwenkgelenk (11) gelenkig mit dem Klemmhebel (6) verbunden ist und das Zugelement (10) über ein erstes Gelenk (12) mit dem Betätigungshebel (9) sowie über ein zweites Gelenk (13) mit dem Grundkörper (4) verbunden ist, wobei das erste Gelenk (12) und das Schwenkgelenk (11) voneinander beabstandet sind, wobei zum Beaufschlagen des Klemmhebels (6) mit dem Klemmdrehmoment der Betätigungshebel (9) um die Achse des Schwenkgelenks (11) von einer Losstellung, in welcher sich der Klemmhebel (6) in der Freigabestellung befindet, in eine Arretierstellung, in welcher sich der Klemmhebel (6) in der Klemmstellung befindet, verschwenkbar ist, und wobei während dieser Schwenkbewegung des Betätigungshebels (9) ein Abstand des ersten Gelenks (12) von dem zweiten Gelenk (13) entgegen einer elastischen Rückstellkraft zunächst zunimmt, dann in einer Totpunktstellung des Betätigungshebels (9) einen Maximalwert erreicht und schließlich auf Grund der Wirkung der elastischen Rückstellkraft wieder abnimmt.

8. Vorrichtung nach Anspruch 7,
**dadurch gekennzeichnet, dass**
das erste Gelenk (12) ein Gelenkelement (14) aufweist, das von dem Zugelement (10) derart durchsetzt ist, dass es in einer Längsrichtung des Zugelements (10) relativ zu diesem bewegbar ist, und die elastische Rückstellkraft von wenigstens einer Druckfeder (15) bewirkt wird, die sich an dem Zugelement (10) abstützt und das Gelenkelement (14) in Richtung des zweiten Gelenks (13) drückt.

9. Vorrichtung nach einem der Ansprüche 1 bis 6,
**dadurch gekennzeichnet, dass**
die Betätigungseinrichtung von einem kraftunterstützten Betätigungsmittel, insbesondere wenigstens einem Hydraulikzylinder oder wenigstens einem Pneumatikzylinder oder wenigstens einem elektrischen Zylinder, gebildet wird, das zwischen dem Grundkörper (4) und dem Klemmhebel (6) wirkend angeordnet ist und mit dessen Hilfe der Klemmhebel (6) mit dem Klemmdrehmoment beaufschlagbar ist.

## Claims

1. Device (1) for fixing at least one agricultural implement (2, 5) to a support element (3), or for fixing a support element, to which an agricultural implement is fastened, to a supporting structure,
**characterized in that**
• the device (1) has a main body (4) having a guide receptacle for receiving the support element (3) and for guiding the main body (4) along the support element (3), wherein at least one agricultural implement (2, 5) is fastenable to the main body, or the main body forms a part of the supporting structure,
• the device (1) comprises a clamping lever (6) with a clamping hole (7), wherein the clamping lever (6) can be arranged such that the clamping hole (7) is aligned with the guide receptacle, with the result that the device (1) is connectable to the support element (3) such that said support element extends both through the clamping hole (7) and through the guide receptacle,
• wherein the clamping hole (7) has a first non-circular shape and a cross section of the guide receptacle has a second non-circular shape, such that torque can be transmitted firstly from the clamping lever (6) to the support element (3), which has a cross section with a third non-circular shape, and secondly from the support element (3) to the guide receptacle and thus to the main body (4), and
• the device (1) comprises an actuating mechanism (8) that is arranged on the main body (4), wherein a clamping torque can be applied to the clamping lever (6) by the actuating mechanism (8) such that said clamping lever rotates relative to the main body (4) from a release position, in which the device (1) is movable relative to the support element (3), into a clamping position, in which the device (1) is frictionally fixed on the support element (3) owing to the torque transmission action.

2. Device (1) according to claim 1,
**characterized in that**
the first non-circular shape and the second non-circular shape are identical, wherein the device (1) is fixable on the support element (3) in particular if the third non-circular shape is identical to the first non-circular shape and the second non-circular shape.

3. Device (1) according to claim 2,
**characterized in that**
the first non-circular shape and the second non-circular shape are formed by a polygonal shape, in particular a tetragonal shape or hexagonal shape.

4. Device (1) according to any of the preceding claims,
**characterized in that**
the clamping hole (7) is configured to be entirely closed with respect to the surroundings, such that the support element (3) can be encompassed on all sides by the clamping lever (6).

5. Device (1) according to one of claims 1 to 3,
**characterized in that**
the clamping hole (7) is configured to be open to the surroundings at one side, such that the support element (3) can be encompassed by the clamping lever (6) in the manner of an open-ended spanner.

6. Device (1) according to any of the preceding claims,
**characterized in that**
the clamping lever (6) is designed as a double lever, and the support element (3) can be encompassed by the double lever on two opposite sides outside the main body (4).

7. Device according to any of the preceding claims,
**characterized in that**
the actuating mechanism (8) has an actuating lever (9) and a tension element (10), wherein the actuating lever (9) is articulatedly connected to the clamping lever (6) via a pivot joint (11), and the tension element (10) is connected via a first joint (12) to the actuating lever (9) and via a second joint (13) to the main body (4), wherein the first joint (12) and the pivot joint (11) are mutually spaced, wherein, in order for the clamping torque to be applied to the clamping lever (6), the actuating lever (9) is pivotable about the axis of the pivot joint (11) from a disengaged position, in which the clamping lever (6) is in the release position, into a locking position, in which the clamping lever (6) is in the clamping position, and wherein, during this pivoting movement of the actuating lever (9), a spacing between the first joint (12) and the second joint (13) initially increases counter to an elastic restoring force, then reaches a maximum value when the actuating lever (9) is in a dead centre position, and finally decreases again owing to the action of the elastic restoring force.

8. Device according to claim 7,
**characterized in that**
the first joint (12) has a joint element (14) through which the tension element (10) extends such that said joint element is movable relative to the tension element (10) in a longitudinal direction of said tension element, and the elastic restoring force is generated by at least one compression spring (15) which is supported on the tension element (10) and which pushes the joint element (14) in the direction of the second joint (13).

9. Device according to one of claims 1 to 6,
**characterized in that**
the actuating mechanism is formed by a power-assisted actuating means, in particular at least one hydraulic cylinder or at least one pneumatic cylinder or at least one electrical cylinder, which is arranged so as to act between the main body (4) and the clamping lever (6) and by means of which the clamping torque can be applied to the clamping lever (6).

## Revendications

1. Dispositif (1) pour fixer au moins un outil de travail agricole (2, 5) à un élément de support (3) ou pour fixer un élément de support, auquel un outil de travail agricole est fixé, à une structure porteuse,
**caractérisé en ce que**
- le dispositif (1) présente un corps de base (4) avec un logement de guidage pour recevoir l'élément de support (3) et pour guider le corps de base (4) le long de l'élément de support (3), dans lequel au moins un outil de travail agricole (2, 5) peut être fixé sur le corps de base ou le corps de base forme un élément de la structure porteuse,
- le dispositif (1) comprend un levier de serrage (6) avec un trou de serrage (7), dans lequel le levier de serrage (6) peut être disposé de telle sorte que le trou de serrage (7) soit aligné avec le logement de guidage, de sorte que le dispositif (1) puisse être relié à l'élément de support (3) de telle sorte qu'il s'étend à la fois à travers le trou de serrage (7) et à travers le logement de guidage,
- dans lequel le trou de serrage (7) présente une première forme non ronde et une section transversale du logement de guidage présente une deuxième forme non ronde, de sorte qu'une transmission de couple est possible d'une part du levier de serrage (6) à l'élément de support (3), qui présente une section transversale avec une troisième forme non ronde, et d'autre part de l'élément de support (3) au logement de guidage et ainsi au corps de base (4), et
- le dispositif (1) comprend un dispositif d'actionnement (8) qui est disposé sur le corps de base (4), dans lequel le levier de serrage (6) peut être sollicité par un couple de serrage au moyen du dispositif d'actionnement (8) de telle sorte qu'il se déplace par rapport au corps de base (4) d'une position de libération à une position d'ouverture, dans lequel le dispositif (1) peut être déplacé par rapport à l'élément de support (3), dans une position de serrage dans laquelle le dispositif (1) est fixé par friction sur l'élément de support (3) en raison de l'effet de la transmission du couple.

2. Dispositif (1) selon la revendication 1,
**caractérisé en ce que**
la première forme non ronde et la deuxième forme non ronde sont identiques, dans lequel le dispositif (1) peut être fixé sur l'élément de support (3) notamment lorsque la troisième forme non ronde est identique à la première forme non ronde et à la deuxième forme non ronde.

3. Dispositif (1) selon la revendication 2,
**caractérisé en ce que**
la première forme non ronde et la deuxième forme non ronde sont formées par une forme polygonale, en particulier une forme carrée ou une forme hexagonale.

4. Dispositif (1) selon l'une des revendications précédentes,
**caractérisé en ce que**
le trou de serrage (7) est complètement fermé par rapport à l'environnement, de sorte que l'élément de support (3) peut être entouré de tous côtés par le levier de serrage (6).

5. Dispositif (1) selon l'une des revendications 1 à 3,
**caractérisé en ce que**
le trou de serrage (7) est ouvert sur un côté vers l'environnement, de sorte que l'élément de support (3) peut être entouré par le levier de serrage (6) à la manière d'une clé à fourche.

6. Dispositif (1) selon l'une des revendications précédentes,
**caractérisé en ce que**
le levier de serrage (6) est conçu comme un double levier et l'élément de support (3) peut être entouré par le double levier sur deux côtés opposés à l'extérieur du corps de base (4).

7. Dispositif selon l'une des revendications précédentes,
**caractérisé en ce que**
le dispositif d'actionnement (8) présente un levier d'actionnement (9) et un élément de traction (10), dans lequel le levier d'actionnement (9) est relié de manière articulée au levier de serrage (6) par une articulation pivotante (11) et l'élément de traction (10) est relié au levier d'actionnement (9) par une première articulation (12) ainsi qu'au corps de base (4) par une deuxième articulation (13), dans lequel la première articulation (12) et l'articulation pivotante (11) sont espacées l'une de l'autre, dans lequel le levier d'actionnement (9) est déplacé autour de l'axe de l'articulation pivotante (11), pour appliquer le couple de serrage sur le levier de serrage (6), d'une position de repos, dans laquelle le levier de serrage (6) se trouve dans la position de libération, dans une position de blocage dans laquelle le levier de serrage (6) se trouve dans la position de serrage, et dans lequel, pendant ce mouvement de pivotement du levier d'actionnement (9), une distance entre la première articulation (12) et la deuxième articulation (13) augmente d'abord à l'encontre d'une force de rappel élastique, puis atteint une valeur maximale dans une position de point mort du levier d'actionnement (9) et diminue finalement à nouveau en raison de l'action de la force de rappel élastique.

8. Dispositif selon la revendication 7,
**caractérisé en ce que**
la première articulation (12) comporte un élément d'articulation (14) qui est traversé par l'élément de traction (10) de manière à être mobile par rapport à celuici dans une direction longitudinale de l'élément de traction (10), et la force de rappel élastique est exercée par au moins un ressort de compression (15) qui prend appui sur l'élément de traction (10) et qui pousse l'élément d'articulation (14) en direction de la deuxième articulation (13).

9. Dispositif selon l'une des revendications 1 à 6,
**caractérisé en ce que**
le dispositif d'actionnement est formé par un moyen d'actionnement assisté par la force, en particulier au moins un vérin hydraulique ou au moins un vérin pneumatique ou au moins un vérin électrique, qui est disposé de manière à agir entre le corps de base (4) et le levier de serrage (6) et à l'aide duquel le levier de serrage (6) peut être sollicité par le couple de serrage.
